Europäisches Patentamt

European Patent Office

Office européen des brevets

(11) EP 1 270 600 A1

(19)

(12) EUROPEAN PATENT APPLICATION
published in accordance with Art. 158(3) EPC

(43) Date of publication:
02.01.2003 Bulletin 2003/01

(51) Int Cl.⁷: **C08F 2/22**, C08F 36/04

(21) Application number: 00980065.7

(22) Date of filing: 12.12.2000

(86) International application number:
**PCT/JP00/08779**

(87) International publication number:
**WO 01/046268 (28.06.2001 Gazette 2001/26)**

(84) Designated Contracting States:
**BE**

(30) Priority: 22.12.1999 JP 36540099

(71) Applicant: **KANEKA CORPORATION**
**Osaka-shi, Osaka 530-8288 (JP)**

(72) Inventors:
• **HASEGAWA, Mitsumasa**
**Takatsuki-shi, Osaka 569-1029 (JP)**

• **NODA, Mitsunaga**
**Kakogawa-shi, Hyogo 675-0033 (JP)**
• **UENO, Masakuni**
**Takasago-shi, Hyogo 676-0026 (JP)**

(74) Representative: **VOSSIUS & PARTNER**
**Siebertstrasse 4**
**81675 München (DE)**

(54) **PROCESS FOR PRODUCING RUBBER LATEX**

(57) A process for preparing a synthetic diene rubber by emulsion polymerization, wherein an electrolyte capable of coagulating particles of a rubber latex is added to the polymerization system in the course of the polymerization when the polymerization conversion reaches 10 to 70 % by weight, and an aqueous solution containing EDTA and an iron salt in an EDTA/iron salt ratio of 4.3 to 18 by mole is added 30 minutes or more after the addition of the electrolyte, thereby producing a rubber latex having a good quality in a shortened period of time in a high polymerization conversion without extending the polymerization time.

EP 1 270 600 A1

**Description**

TECHNICAL FIELD

The present invention relates to a process for preparing a latex of a diene rubber, and more particularly to a process for preparing a latex of a diene rubber, particularly a latex of a diene rubber having a large average particle size, in a high polymerization conversion without extending the polymerization time.

BACKGROUND ART

Diene rubbers or diene rubber latices have been widely used as raw materials of, for example, tires and rubber components of ABS resin and MBS resin. In polymerization of an aliphatic conjugated diene monomer or a monomer mixture of an aliphatic conjugated diene compound and an ethylenically unsaturated compound copolymerizable therewith, in general the polymerization reaction rate becomes slow rapidly when the polymerization conversion reaches some level. In that case, mere extension of the polymerization time to achieve a desired polymerization conversion prolongs occupation of a polymerization apparatus, thus resulting in lowering of the production efficiency. As a countermeasure therefor it has been widely adopted to raise the polymerization temperature during the polymerization or to add an initiator such as a peroxide during the polymerization. However, if the polymerization temperature is raised to more than $60°C$, the gel fraction of a rubber increases to result in deterioration of elasticity which is a characteristic of rubbers. Also, even if a peroxide or the like is added, the polymerization conversion does not increase too much.

If the polymerization conversion reaches about 80 % by weight or more, the rate of increase of the polymerization conversion lowers and, in general, the pressure of the reaction system also lowers. Thus, Japanese Patent Publication Kokai No. 57-131211 proposes a method for achieving a high conversion by introducing an inert gas to a reaction vessel under pressure to raise the inner pressure to $1.5 \text{ kg/cm}^2\text{G}$ or more when the polymerization conversion reaches at least 80 % by weight. However, this method requires a large cost for isolation, incineration or recovery of the unreacted monomers and inert gas and, therefore, it is economically disadvantageous.

On the other hand, the present inventors previously proposed a process for preparing a latex of a rubber having a large average particle size in a relatively short period of time, which is characterized by adding an electrolyte during the polymerization reaction when the polymerization conversion reaches 10 to 70 % by weight (Japanese Patent Application No. 11-127814). However, this process has the problem that the polymerization rate is lowered by the addition of an electrolyte and accordingly the polymerization conversion achieved in a prescribed time is lowered. Since unreacted monomers are recovered and incinerated, the cost performance of monomers is low. Extension of the polymerization time to achieve a higher conversion lowers the productivity. Also, the polymerization conversion cannot be favorably increased by conventional means as mentioned above.

Thus, it is an object of the present invention to prepare, in a process for preparing a diene rubber latex wherein an electrolyte is added during the polymerization, a latex of a rubber having a good quality and having a proper gel fraction in a high polymerization conversion in a prescribed polymerization time with a little formation of precipitates.

DISCLOSURE OF INVENTION

The present inventors supposed that the reason why the final conversion became low in the emulsion polymerization of conjugated diene compounds was that since the total surface area of latex particles per unit volume of a latex decreased owing to agglomeration of the latex particles, a radical generating source present in the vicinity of the particle interface became hard to enter the field of polymerization. Thus, under the consideration that it would be important in increasing the polymerization conversion to make radical generation in the vicinity of the particle interface efficient and to make the radical generation continue, the present inventors aimed at a chelate compound formed by EDTA (disodium ethylenediaminetetraacetate) and an iron salt of a redox initiator as a means to achieve them and made an intensive study.

T. R. Hongness, "Qualitative Analysis and Chemical Equilibrium", 5th edition, published by Holt, Rinehart and Winston Inc. in 1966 discloses that in general EDTA and an iron salt form a chelate compound in equimolar amounts. In chelatometric titration, it is desirable that the bonding ratio of a metal ion to a chelating agent is 1 : 1. EDTA is introduced as a representative compound satisfying this requirement in "Chelatometric Titration" at page 896 of Encyclopaedia Chimica, No. 2, 22nd edition, edited by Kagaku Daijiten Henshu Iinkai and published by Kyoritsu Shuppan Kabushiki Kaisha on September 10, 1978 and in Seiji Takagi, "Experiment and Calculation of Quantitative Analysis, Vol. 2, Method of Quantitative Analysis" published by Kyoritsu Shuppan Kabushiki Kaisha on June 1, 1969. Also, EDTA is introduced as a chelating agent for an iron salt used in a redox initiator of emulsion polymerization in R. W. Brown, C. V. Bawn, E. B. Hansen, L. H. Howland, "Industrial and Engineering Chemistry", Vol. 6, No. 3, 234(1974), H. Minato and M. Iwakawa, "Polymer Journal", Vol. 6, No. 3, 234(1974) and in Shinzo Omi, "Assessment of Polymer Manufacturing Process", Assessment of ABS Manufacturing Process at page 124 of Research Report (1990) of the Research Group on Reaction Engineering of The Society of Polymer Science, Japan. Further, as a result of examining working examples in patent publications concerning emulsion polymerization for the production of ABS and MBS resins, it was found that the molar ratio of EDTA to an iron salt (EDTA/iron salt) in redox initiator was close to 1, for example, 1 in JP-A-59-122510, 1.3 in JP-A-45-22629, 1.9 in JP-B-59-49937, 2.4 in US-A-4370252, 3.0 in JP-A-8-157502, 3.0 in JP-A-44-2578, 3.3 in US-A-3214401, 3.7 in JP-A-56-136807, and 4.2 in JP-A-46-14263. There was found no working example showing EDTA/iron salt molar ratio exceeding 4.3. Like this, the molar ratio (EDTA/iron salt) of EDTA to an iron salt conventionally used is close to 1 and even the maximum is 4.2.

The present inventors firstly made experiments to obtain an empirical formula of initial polymerization rate under the conditions that the EDTA/iron salt molar ratio was made approximately constant within the range below 3 and the amounts of EDTA and ferrous sulfate were varied. As a result, it was found that the initial polymerization rate was proportional to the EDTA weight raised to the 0.85th power. Thus, in a process wherein an electrolyte is added during a polymerization for the production of a rubber, in order to increase the polymerization rate after the addition of electrolyte and to enhance the final polymerization conversion, the present inventors have gone ahead with experiments wherein the EDTA/iron salt molar ratio is varied after the addition of electrolyte and have accomplished the present invention.

Thus, the present invention provides a process for preparing a latex of a rubber which comprises emulsion-polymerizing a monomer component comprising 70 to 100 % by weight of an aliphatic conjugated diene monomer and 30 to 0 % by weight of an ethylenically unsaturated monomer copolymerizable therewith, wherein an electrolyte is added to the polymerization system in the course of the polymerization when the polymerization conversion reaches 10 to 70 % by weight, and an aqueous solution containing EDTA and an iron salt in an EDTA/iron salt ratio of 4.3 to 18 by mole is added 30 minutes or more after the addition of the electrolyte.

The amount of the iron salt dissolved in the above-mentioned aqueous solution is preferably from 0.00001 to 0.003 parts by weight per 100 parts by weight of the monomer component. Also, the EDTA/iron salt ratio is preferably from 6 to 10 by mole.

The polymerization rate is decreased by the addition of an electrolyte, but it is increased by adding the above-mentioned aqueous solution of EDTA and an iron salt to the polymerization system.


BEST MODE FOR CARRYING OUT THE INVENTION

In the emulsion polymerization process according to the present invention, an aqueous solution of an electrolyte is added during the polymerization when, after initiating the polymerization, the polymerization conversion reaches 10 to 70 % by weight in order to coagulate the produced rubber particles to enhance the particle size.

Firstly an emulsion polymerization of an aliphatic conjugated diene monomer alone or a mixture of not less than 70 % by weight of an aliphatic conjugated diene monomer and not more than 30 % by weight of an ethylenically unsaturated monomer copolymerizable therewith is started in a conventional manner.

Examples of the aliphatic conjugated diene monomer used in the present invention are, for instance, 1,3-butadiene, isoprene, chloroprene and the like. In particular, 1,3-butadiene is preferred from the viewpoint of a high production efficiency. The conjugated diene monomers may be used alone or in admixture thereof.

As the ethylenically unsaturated monomer, various vinyl compounds and olefin compounds can be used in the present invention. Representative examples thereof are, for instance, a methacrylic ester such as methyl methacrylate or ethyl methacrylate, an acrylic ester such as methyl acrylate or ethyl acrylate, an aromatic vinyl compound such as styrene or $\alpha$-methylstyrene, its nucleus substitution derivative such as vinyltoluene or chlorostyrene, and the like. These may be used alone or in combination thereof.

The proportion of the aliphatic conjugated diene monomer in the monomer mixture of aliphatic conjugated diene monomer and ethylenically unsaturated monomer copolymerizable therewith is at least 70 % by weight. If the proportion is less than 70 % by weight, the obtained polymer is poor in properties as a rubber and no toughness is obtained.

In the present invention, a redox initiator is used as a polymerization initiator. The redox initiator is composed of an organic peroxide, a chelate compound formed in an aqueous solution of an iron salt and EDTA, and a secondary reducing agent which restores the chelate compound of ferric ion to the chelate compound of ferrous ion. The amounts of these organic peroxide, iron salt, EDTA and secondary reducing agent which are added to the polymerization system upon starting the polymerization can be selected within the ranges used in usual emulsion polymerization of conjugated diene monomers.

Examples of the organic peroxide are, for instance, hydroperoxides such as t-butyl hydroperoxide, cumene hydroperoxide and p-menthane hydroperoxide, and other peroxides. The organic peroxides may be used alone or in admixture thereof. The amount of the organic peroxide is usually from 0.05 to 0.3 part by weight per 100 parts by weight of the monomer component.

The iron salt used as a reducing agent in the present invention is those forming a chelate compound with EDTA in water and includes, for instance, ferrous sulfate, ferrous phosphate, ferrous chloride, ferrous nitrate, and the like. These ferrous salts may be used alone or in admixture thereof. The amount of the iron salt charged at the time of starting the polymerization is from 0.001 to 0.05 part by weight per 100 parts by weight of the monomer component. The amount of EDTA charged is from 0.002 to 0.1 part by weight per 100 parts by weight of the monomer component. The molar ratio of the EDTA to the iron salt (EDTA/iron salt) is from 0.8 to 4.3.

Examples of the secondary reducing agent used in the present invention are, for instance, sodium formaldehyde sulfoxylate (Rongalit), sodium bisulfite, sodium thiosulfate, sodium pyrosulfite, and the like. The secondary reducing agents may be used alone or in admixture thereof. The amount of the secondary reducing agent is usually from 0.03 to 0.3 part by weight, preferably 0.04 to 0.2 part by weight, per 100 parts by weight of the monomer component.

The amount of water used in the emulsion polymerization is a usually adopted amount, and is preferably from 60 to 200 parts by weight, more preferably from 70 to 150 parts by weight, per 100 parts by weight of the monomer component.

The amount of an emulsifier is preferably from 1 to 4 parts by weight per 100 parts by weight of the monomer component. The emulsifier may be additionally fed during the polymerization so as to prevent sticking of particles to each other or formation of a precipitate due to shortage of the emulsifier on the particle surface. Any emulsifiers as used in usual polymerization for rubbers can be used in the present invention, e.g., a fatty acid soap such as sodium oleate, a resin acid soap such as potassium disproportionated rosin, an anionic surfactant such as sodium laurylsulfate or sodium dodecylbenzenesulfonate, a non-ionic surfactant such as polyoxyethylene alkyl ether, and the like.

Other additives, e.g., a chain transfer agent such as mercaptan and a crosslinking agent such as allyl methacrylate, can be used without any restriction.

The polymerization reaction temperature can be selected from the range adopted in a usual emulsion polymerization, and is preferably from 35 to 80°C, more preferably from 40 to 60°C.

After starting the polymerization, an electrolyte capable of coagulating polymer particles of a latex is added to the polymerization system when the polymerization conversion falls within the range of 10 to 70 % by weight, preferably 20 to 60 % by weight, thereby coagulating the particles of the latex to enhance the particle size. Examples of the electrolyte are, for instance, an organic acid containing a carboxyl group and having 6 or less carbon atoms such as formic acid, acetic acid, propionic acid, oxalic acid, succinic acid, malic acid or citric acid, salts thereof, and sodium sulfate. These may be used alone or in combination thereof. The electrolyte is used in an amount of 0.1 to 5 parts by weight per 100 parts by weight of the monomer component. It is convenient to use the electrolyte in the form of a 1 to 20 % by weight aqueous solution. If the addition of the electrolyte is conducted at a time when the polymerization conversion is less than 10 % by weight, a precipitate is easy to be formed. If the addition of the electrolyte is conducted at a time when the polymerization conversion exceeds 70 % by weight, the viscosity of the rubber latex becomes too high and, accordingly, temperature control and stirring are difficult. Also, if the amount of electrolyte added is less than 0.1 part by weight, the particle size of the latex cannot be enhanced to 0.1 $\mu$m or more, and if the amount is more than 5 parts by weight, a precipitate is easy to be produced.

The polymerization conversion (% by weight) as herein used is a value obtained according to the following equation:

$$\text{Polymerization conversion} = \frac{SC \times (W + K) - K}{(1 - SC) \times M} \times 100.$$

wherein SC (% by weight) is the solid concentration of polymerization system, W (part by weight) is the amount of water, K (part by weight) is the total amount of an emulsifier and an electrolyte, and M (part by weight) is the amount of a monomer or monomers.

The solid concentration SC in the above equation is determined by the following method. About 1 g of a latex is taken out of a polymerization reactor and placed in a vessel (weight A) previously weighed. The latex is allowed to stand under atmospheric pressure (760 mmHg) until it is defoamed, and is weighed (weight B). The latex is then dried for 1 hour in a drier kept at 120°C and is weighed (weight C). The solid concentration is calculated by the following equation.

$$SC = \frac{\text{Weight of sample after drying}}{\text{Weight of sample before drying}} \times 100$$

$$= \frac{\text{Weight C} - \text{Weight A}}{\text{Weight B} - \text{Weight A}} \times 100$$

The polymerization rate lowers owing to the addition of an elecytrolyte. From this fact, it is assumed that EDTA and an iron salt which have been present in the polymerization system no longer function effectively owing to the addition of an electrolyte or coagulation of the produced polymer particles.

In the present invention, an aqueous solution of EDTA and an iron salt is added to the polymerization system 30 minutes or more after the addition of electrolyte for the purpose of enhancing the efficiency of the initiation reaction of a polymerization initiator and of making the initiation reaction continue. The amount, based on the monomer component, of the iron salt to be added in this stage is decreased to less than the amount used in a usual emulsion polymerization, thus resulting in using the secondary reducing agent and the peroxide in excess with respect to the iron salt, so that the EDTA/iron salt molar ratio becomes a rate-determining factor of the initiation reaction rate.

The EDTA/iron salt molar ratio in an aqueous solution of EDTA and an iron salt to be added during the polymerization is from 4.3 to 18, preferably 6 to 10. EDTA and the iron salt may be added in the form of a separate aqueous solution of each of them. The amount of the iron salt added is from 0.00001 to 0.003 part by weight per 100 parts by weight of the monomer component. If the addition of the aqueous solution of EDTA and iron salt is conducted before 30 minutes from the addition of electrolyte, the produced polymer particles are not sufficiently coagulated. The addition of the aqueous solution of EDTA and iron salt can be conducted at any time after 30 minutes or more from the addition of electrolyte. From the viewpoint of shortening the polymerization time, it is preferable to conduct the addition of the aqueous solution as promptly as possible after an elapse of 30 minutes from the addition of electrolyte, for example, before the polymerization conversion reaches 80 % by weight.

After the addition of an aqueous solution of EDTA and an iron salt, the polymerization is further continued with stirring, for example, until the polymerization conversion reaches 80 % by weight or higher, thus giving a rubber latex having a weight average particle size of not less than 0.1 μm in a shortened period of time, e.g., in a total polymerization time of 6 to 14 hours. According to the process of the present invention, a high polymerization conversion can be achieved in a prescribed polymerization time in spite of the addition of an electrolyte. The particle size of the obtained latex can be controlled by adjusting the amount of the electrolyte which is added during the polymerization. Further, according to the process of the present invention, the amount of a precipitate formed in the polymerization step can be suppressed to at most 0.2 % by weight based on the monomer used.

The rubber latexes prepared according to the present invention can be employed, for example, in tires as a synthetic rubber and in the preparation of ABS resin, MBS resin and the like by graft polymerization.

The present invention is more specifically explained by means of the following examples in which all parts and % are by weight unless otherwise noted. It is to be understood that the present invention is not limited to these examples.

In the examples, the polymerization reaction rate or polymerization rate of an emulsion polymerization was determined according to the method described in Shinzo Omi, Synthesis and Design of Microsphere by Emulsion Polymerization Reaction, page 59 (1989) published by IPC Shuppan Kabushiki Kaisha. The term "initial polymerization rate" as used herein means the amount of a change (%/hour) in polymerization conversion between 1 hour and 2 hours after starting the polymerization. The term "later stage polymerization rate" as used herein means an average value of the amounts of a change in polymerization conversion per every unit hour (%/hour) obtained between 9 hours and 12 hours after starting the polymerization.

EXAMPLE 1

A 3 liter autoclave degassed to vacuum was charged with 2.0 parts of semi-hardened beef tallow fatty acid potassium salt, 0.44 part of potassium tertiary phosphate, 0.2 part of n-dodecylmercaptan, 0.0014 part of ferrous sulfate, 0.0023 part of disodium ethylenediaminetetraacetate (EDTA), 0.2 part of sodium formaldehyde sulfoxylate, 77 parts of pure water and 100 parts of 1,3-butadiene. They were stirred and the temperature was elevated to 50°C. To the autoclave was added 0.05 part of p-menthane hydroperoxide to start the polymerization. After 4.5 hours when the polymerization conversion reached about 45 %, 0.8 part of sodium sulfate was added to the polymerization system.

An aqueous solution of 0.00142 part of EDTA and 0.000176 part of ferrous sulfate was added as an aqueous solution of a chelate compound to the polymerization system 30 minutes after the addition of sodium sulfate. The EDTA/ferrous sulfate molar ratio in this aqueous solution was 6.03. After the addition of the aqueous solution, the polymerization was further continued and ended 12 hours after starting the polymerization. The later stage polymerization rate, the final conversion and the precipitate rate of the obtained butadiene rubber latex were measured. The precipitate rate is represented by percentage of the weight of a precipitate based on the weight of the monomer component. Further, the obtained rubber latex was coagulated with sodium chloride to give a rubber crumb and the gel fraction of the rubber was measured. The results are shown in Table 1.

The gel fraction is represented by a weight percentage of a gel in a solid matter of a latex. The gel fraction is measured by coagulating about 5 g of a rubber latex, vacuum-drying the coagulated latex at 50°C for 48 hours, placing about 0.5 g of the obtained solid matter in a previously weighed 150 mesh wire net (weight A), weighing it (weight B), immersing the solid matter in toluene for 48 hours with the wire net, drying a gel remaining on the wire net at 105°C for 30 minutes, and weighing it (weight C). The gel fraction is calculated according to the following equation.

$$\text{Gel fraction} = \frac{\text{Weight of gel}}{\text{Weight of solid matter}} \times 100$$

$$= \frac{\text{Weight C} - \text{Weight A}}{\text{Weight B} - \text{Weight A}} \times 100$$

EXAMPLE 2

The polymerization was carried out in the same manner as in Example 1 except that an aqueous solution of 0.00212 part of EDTA and 0.000176 part of ferrous sulfate (EDTA/ferrous sulfate molar ratio: 9.00) was used as the aqueous solution of chelate compound to be added after the addition of sodium sulfate. The results are shown in Table 1.

EXAMPLE 3

The polymerization was carried out in the same manner as in Example 1 except that an aqueous solution of 0.0035 part of EDTA and 0.000176 part of ferrous sulfate (EDTA/ferrous sulfate molar ratio: 14.86) was used as the aqueous solution of chelate compound to be added after the addition of sodium sulfate. The results are shown in Table 1.

EXAMPLE 4

The polymerization was carried out in the same manner as in Example 1 except that an aqueous solution of 0.00422 part of EDTA and 0.000176 part of ferrous sulfate (EDTA/ferrous sulfate molar ratio: 17.94) was used as the aqueous solution of chelate compound to be added after the addition of sodium sulfate. The results are shown in Table 1.

COMPARATIVE EXAMPLE 1

The polymerization was carried out in the same manner as in Example 1 except that an aqueous solution of EDTA and ferrous sulfate was not added after the addition of sodium sulfate. The results are shown in Table 1.

COMPARATIVE EXAMPLE 2

The polymerization was carried out in the same manner as in Example 1 except that 0.05 part of p-menthane hydroperoxide was added instead of the aqueous solution of chelate compound 30 minutes after the addition of sodium sulfate. The results are shown in Table 1.

COMPARATIVE EXAMPLE 3

The polymerization was carried out in the same manner as in Example 1 except that an aqueous solution of 0.00162 part of EDTA and 0.00097 part of ferrous sulfate (EDTA/ferrous sulfate molar ratio: 1.25) was used as the aqueous solution of chelate compound to be added after the addition of sodium sulfate. The results are shown in Table 1.

COMPARATIVE EXAMPLE 4

The polymerization was carried out in the same manner as in Example 1 except that an aqueous solution of 0.000704 part of EDTA and 0.000176 part of ferrous sulfate (EDTA/ferrous sulfate molar ratio: 2.99) was used as the aqueous solution of chelate compound to be added after the addition of sodium sulfate. The results are shown in Table 1.

Table 1

| | Aqueous solution of chelate compound added after the addition of electrolyte (sodium sulfate) | | | | Later stage polymerization rate (%/hour) | Final conversion in polymerization for 12 hours (%) | Precipitate rate (%) | Gel fraction of rubber (%) |
|---|---|---|---|---|---|---|---|---|
| | Addition time | Amount of EDTA (wt. part) | Amount of ferrous sulfate (wt. part) | EDTA/iron salt molar ratio | | | | |
| Ex. 1 | 30 min. after addition of electrolyte | 0.00142 | 0.000176 | 6.03 | 5.31 | 86.16 | 0.06 | 87.5 |
| Ex. 2 | 30 min. after addition of electrolyte | 0.00212 | 0.000176 | 9.00 | 6.55 | 92.57 | 0.11 | 87.2 |
| Ex. 3 | 30 min. after addition of electrolyte | 0.0035 | 0.000176 | 14.86 | 6.10 | 91.95 | 0.07 | 87.0 |
| Ex. 4 | 30 min. after addition of electrolyte | 0.00422 | 0.000176 | 17.94 | 5.29 | 90.23 | 0.05 | 87.0 |
| Com. Ex. 1 | no addition | - | - | - | 3.12 | 78.87 | 0.10 | 86.7 |
| Com. Ex. 2 | no addition (provided that 0.05 part of peroxide was added 30 min. after addition of electrolyte) | - | - | - | 3.40 | 79.90 | 0.08 | 86.5 |
| Com. Ex. 3 | 30 min. after addition of electrolyte | 0.00162 | 0.00097 | 1.25 | 3.73 | 80.05 | 0.05 | 87.0 |
| Com. Ex. 4 | 30 min. after addition of electrolyte | 0.000704 | 0.000176 | 2.99 | 3.81 | 81.17 | 0.11 | 87.0 |

INDUSTRIAL APPLICABILITY

According to the process of the present invention, a rubber latex having a large average particle size is obtained in a relatively short period of time by adding an electrolyte during the polymerization. Moreover, by adding an aqueous solution of EDTA and an iron salt in a specific molar ratio after the addition of the electrolyte, the later stage polymerization rate can be increased and the final polymerization conversion can be further increased. Since a high polymerization conversion can be achieved without extending the polymerization time, the productivity is good, and a rubber latex having a good quality can be obtained.

## Claims

1. A process for preparing a latex of a rubber which comprises emulsion-polymerizing a monomer component comprising 70 to 100 % by weight of an aliphatic conjugated diene monomer and 30 to 0 % by weight of an ethylenically unsaturated monomer copolymerizable therewith, wherein an electrolyte is added to the polymerization system in the course of the polymerization when the polymerization conversion reaches 10 to 70 % by weight, and an aqueous solution containing EDTA and an iron salt in an EDTA/iron salt ratio of 4.3 to 18 by mole is added 30 minutes or more after the addition of the electrolyte.

2. The process of Claim 1, wherein the amount of the iron salt dissolved in said aqueous solution is from 0.00001 to 0.003 part by weight per 100 parts by weight of said monomer component.

3. The process of Claim 1, wherein the EDTA/iron salt ratio in said aqueous solution is from 6 to 10 by mole.

4. The process of Claim 1, wherein said electrolyte is at least one member selected from the group consisting of an organic acid containing carboxyl group and having 6 or less carbon atoms, its salts and sodium sulfate.

5. The process of Claim 1, wherein said electrolyte is employed in an amount of 0.1 to 5 parts by weight per 100 parts by weight of said monomer component.

6. The process of Claim 1, wherein the polymerization initiator of the emulsion polymerization is a redox initiator comprising an organic peroxide, a chelate compound formed from an iron salt as a reducing agent and EDTA, and a secondary reducing agent, and the amount of the iron salt charged at the time of starting the polymerization is from 0.01 to 0.05 part by weight per 100 parts by weight of said monomer component.

7. The process of Claim 1, wherein the polymerization initiator of the emulsion polymerization is a redox initiator comprising an organic peroxide, a chelate compound formed from an iron salt as a reducing agent and EDTA, and a secondary reducing agent, and the amount of the iron salt added during the polymerization is such that the organic peroxide and secondary reducing agent which have been present in the polymerization system are present in excess with respect to said iron salt added.

## INTERNATIONAL SEARCH REPORT

| International application No. |
| --- |
| PCT/JP00/08779 |

**A.  CLASSIFICATION OF SUBJECT MATTER**
Int.Cl$^7$   C08F2/22, C08F36/04

According to International Patent Classification (IPC) or to both national classification and IPC

**B.  FIELDS SEARCHED**

Minimum documentation searched (classification system followed by classification symbols)
Int.Cl$^7$   C08F2/22-2/30, C08F36/04-36/08,
C08F136/04-136/08, C08F236/04-236/08

Documentation searched other than minimum documentation to the extent that such documents are included in the fields searched

Electronic data base consulted during the international search (name of data base and, where practicable, search terms used)
WPI/L

**C.  DOCUMENTS CONSIDERED TO BE RELEVANT**

| Category* | Citation of document, with indication, where appropriate, of the relevant passages | Relevant to claim No. |
| --- | --- | --- |
| A | US, 4480078, A (The Goodyear   Tire & Rubber Company), 30 October, 1984 (30.10.84), EXAMPLE 1 & EP, 75529, A2     & JP, 58-69204, A | 1-7 |

☐  Further documents are listed in the continuation of Box C.   ☐   See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 01 March, 2001 (01.03.01) | 13 March, 2001 (13.03.01) |

| Name and mailing address of the ISA/ | Authorized officer |
| --- | --- |
| Japanese Patent Office | |
| Facsimile No. | Telephone No. |

Form PCT/ISA/210 (second sheet) (July 1992)

10